# EUROPEAN PATENT APPLICATION

(11) **EP 3 540 400 A1**
(43) Date of publication of application: **18.09.2019**
(21) Application number: 18161703.6
(22) Date of filing: 14.03.2018
(51) Int. Cl.: G01M 3/40

(54) **A METHOD, AN ARRANGEMENT AND A SYSTEM FOR DETERMINING INTEGRITY OF A PACKAGE**

(71) Applicant: Tetra Laval Holdings & Finance S.A., 1009 Pully (CH)
(72) Inventor: HALLSTADIUS, Hans, 226 47 Lund (SE)
(74) Representative: Tetra Pak - Patent Attorneys SE

(57) **Abstract**

A method (600) for assessing a package (100) is presented, wherein the package (100) is a multi-layer package comprising an Aluminum foil (212) held between at least one internal layer and at least one external layer. The method comprises filling (602) the package with a first conductive liquid (304), placing (604) the package in a tray (306) filled with a second conductive liquid (308), such that the Aluminum foil (212) is in contact with the second conductive liquid (308), placing (606) a first cable (310) connected to an apparatus (302) in contact with the first conductive liquid (304), placing (608) a second cable (312) connected to the apparatus (302) in contact with the second conductive liquid (308), providing (610) a potential difference between the first and second cable (312, 314), obtaining (612) current data over a period of time in a circuit formed by the first cable (310), the first conductive liquid (304), the package (100), the second conductive liquid (308) and the second cable (312), identifying (614) a current decay in the current data, determining (616) a capacitance based on the current decay, and comparing (618) the capacitance with capacitance reference data in order to determine if the circuit is closed.

## Description

### Technical Field

The invention generally relates to the field of assessing package integrity. More particularly, the present invention relates to determining package integrity of carton packages.

### Background Art

Within the field of packaging technology there are many applications in which it is needed that packages produced are able to keep product held within the packages securely shielded from surrounding space. For instance, within the field of liquid food packaging, it is well known to pack a heat treated product, such as orange juice or milk, in an aseptic package. Such package is made not only to reliably hold the product, that is, providing for that the product does not leak out from the package, but also to make sure that oxygen, light, odors, microorganisms etc. that may harm the product are hindered from coming into contact with the product. The combination of properly made heat treatment of the product and having the aseptic package made such that this efficiently shield the product from the surrounding space provides for that a shelf life of 12 months or above can be achieved, which in turn provides economical as well as environmental benefits.

To make sure that the package can shield off the product from the surrounding space different measures are made. For instance, in order to provide for that light does not reach the product, an Aluminum foil may be integrated in a packaging material used for the aseptic package. In order to reduce cost and environmental effects, the Aluminum foil is most often made no thicker than necessary for providing a light and/or oxygen barrier. If having a carton-based aseptic package, a paper board layer may be used for providing robustness to the package, and in this way complement the Aluminum foil.

In addition to designing the package such that the product can be shielded from the surrounding space, tests are most often made at regular intervals during production to make sure that the packages produced fulfill set requirements. Tests are often also made when settings of a packaging machine, also known as filling machine, have been amended or if a new type of packaging material and/or product is used.

In order to verify that the package shields off the product from the surrounding space according to set requirements, so-called integrity tests or integrity checks are made. Such tests can be made in different ways. It is for instance known to have subatmospheric pressure within the package during sealing. An effect of this is that the sides of the package will bulge inwards due to the pressure difference. In case there is a leakage, the pressure difference will be lost and this will be visible in that the sides are no longer bulging inwards.

Still an option is to submerge the package in water in order to see if there is a leakage in the package. Since the package is most often not completely filled, air kept inside the package may be released out from the package in the form of air cavities when the package is submerged. Another reason to submerge the package is that it is in this way possible to assess volume changes in the package over time. If for instance bacterial growth occurs inside the package this may result in that pressure inside the package is affected, and thus by assessing volume changes such bacterial growth may be detected.

The prior art solutions presented above suffer from at least two drawbacks if being applied to aseptic packages. First, a change in e.g. pressure caused by e.g. bacterial growth may require days or weeks-to be able to detect. Second, there is a not neglectable risk that packages with insufficient integrity is not detected, even though personnel performing the tests are well aware of the risks involved. It may for instance be that the package is only exposed to light of a specific wavelength during a integrity test period, and that this wavelength does not trigger any negative effect in the product.

Thus, there is a need for methods and arrangements for quickly and reliably determining the integrity of the package.

### Summary

It is an object of the invention to at least partly overcome one or more of the above-identified limitations of the prior art. In particular, it is an object to provide a method and an apparatus for determining an integrity of the package that are reliable as well as time efficient.

To solve these objects it is provided according to a first aspect a method for assessing a package, wherein the package is a multi-layer package comprising an Aluminum foil held between at least one internal layer and at least one external layer, said method comprising filling the package with a first conductive liquid, placing the package in a tray filled with a second conductive liquid, such that the Aluminum foil is in contact with the second conductive liquid, placing a first cable connected to an apparatus in contact with the first conductive liquid, placing a second cable connected to the apparatus in contact with the second conductive liquid, providing a potential difference between the first and second cable, obtaining current data over a period of time in a circuit formed by the first cable, the first conductive liquid, the package, the second conductive liquid and the second cable, identifying a current decay in the current data, determining a capacitance based on the current decay, and comparing the capacitance with capacitance reference data in order to determine if the circuit is closed.

An advantage with this method is that a reliable test can be performed. The package's capability as a capacitor is namely well correlated to if the system is correctly set up.

A further advantage is that the integrity of the package can be determined in a time efficient manner. Unlike many other test methods, this test method does not require any bacterial growth or other effects of insufficient integrity, which provides for that less time is needed for determining if adequate integrity is provided or not.

The method may further comprise determining a resistance based on the potential difference and the current data, and comparing the resistance with resistance reference data in order to determine integrity of the package.

An advantage with this is that by first determining the capacitance of the package it can be determined that the system is correctly set, such that reliable measurements can be made, before determining the resistance and subsequently the integrity of the package. This namely provides for that the risk can be reduced that incorrect conclusions regarding package integrity are made.

The at least one external layer may comprise at least one paperboard layer.

The second conductive liquid may be salt water.

The first conductive liquid may be salt water.

The capacitance of the package may be 1 to 10 nF.

The method may further comprise, if capacitance conforms with capacitance reference data, activating a first user interface output device indicating that the circuit formed by the first cable, the first conductive liquid, the package, the second conductive liquid and the second cable is closed.

An advantage of this is that a built-in control function is made available. For instance, if the package is not in contact with the second conductive liquid this will be detected, which has a positive effect that a user can adapt the system such that reliable measurements may be made.

The method may further comprise, if resistance conforms with resistance reference data, activating a second user interface output device indicating an integrity level of the package corresponding to a conformity level between the resistance and the resistance reference data.

According to a second aspect it is provided an apparatus for determining integrity of a package, wherein the package is a multi-layer package comprising an Aluminum foil held between at least one internal layer and at least one external layer, said apparatus comprising a first cable for providing contact between a first conductive liquid placed in the package and the apparatus, a second cable for providing contact between a second conductive liquid placed in a tray and the apparatus, wherein the package is placed in the tray such that the Aluminum foil is in contact with the second conductive liquid, a voltage supply for providing a potential difference between the first and second cable, a current measuring device configured to obtain current data over a period of time in a circuit formed by the first cable, the first conductive liquid, the package, the second conductive liquid and the second cable, a processing unit and a memory, wherein the processing unit is configured to identify a current decay in the current data, determine a capacitance based on the current decay, and compare the capacitance with capacitance reference data in order to determine if the circuit is closed.

In addition to the advantages presented in relation to the first aspect, an advantage is that if the apparatus is battery-powered, stable tests may be performed irrespective of a charging level of a battery used by the apparatus. The low power consumption levels also provides for that the battery will not have to be frequently replaced, which is an advantage.

The processing unit may further be configured to determine a resistance based on the potential difference and the current data, and compare the resistance with resistance reference data in order to determine integrity of the package.

The second conductive liquid may be salt water.

The first conductive liquid may be salt water.

The capacitance of the package may be 1 to 10 nF.

The apparatus may further comprise a first user interface output device configured to indicate that the circuit formed by the first cable, the first conductive liquid, the package, the second conductive liquid and the second cable is closed if capacitance conforms with capacitance reference data.

The apparatus may further comprise a second user interface output device configured to indicate an integrity level of the package corresponding to a conformity level between the resistance and the resistance reference data.

According to a third aspect it is provided a system for assessing a package, wherein the package is a multi-layer package comprising an Aluminum foil held between at least one internal layer and at least one external layer, said system comprising a tray for holding a second conductive liquid and the package, and the apparatus according to the second aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a generally illustrates a perspective view of a package.
Fig. 1b generally illustrates a piece of packaging material before being folded into the package illustrated in fig. 1a.
Fig. 2 illustrates a cross-sectional view of the packaging material.
Fig. 3 is a schematic illustration of a system comprising a system for determining an integrity of a package.
Fig. 4a is a circuit scheme representing the package with adequate integrity.
Fig. 4b is a graph illustrating current data obtained during a period of time for the package represented by the circuit scheme in fig. 4a.
Fig. 5a is a circuit scheme representing the package with inadequate integrity.
Fig. 5b is a graph illustrating current data obtained during a period of time for the package represented by the circuit scheme in fig. 5a.
Fig. 6 is a flowchart illustrating steps of a method for determining the integrity of the package.

### Detailed description

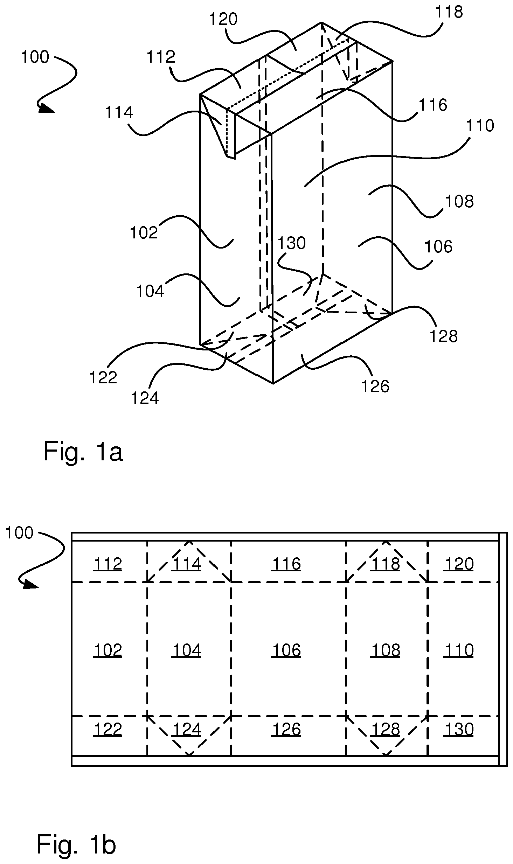

Fig. 1a generally illustrates an example of a carton package 100 made from a piece of package material illustrated in fig. 1b. The carton package 100 comprises a number of panels divided from each other by weakening lines. The weakening lines provide for that the piece of packaging material can be reliably and efficiently folded into the package 100 by a packaging machine, also known as a filling machine.

In this example, the package 100 comprises a first rear panel 102, a left panel 104, a front panel 106, a right panel 108 and a second rear panel 110, which together form a sleeve-shaped main body of the package 100. The first and second rear panel 102, 110 are attached to each other by a so-called longitudinal sealing. In order to avoid that product held in the package comes into contact with interior layers of the packaging material a peripheral part of the second rear panel 110, that is placed inside a peripheral part of the first rear panel 102, can be protected by a plastic strip, sometimes referred to as a longitudinal sealing strip.

Further, the package 100 comprises a first top rear panel 112, a left corner top panel 114, a top front panel 116, a right corner panel 118 and a second top rear panel 120, which together form a top of the package 100. In a similar manner as the first and second rear panel 102, 110, the first and second rear top panels 112, 120 are attached to each other. In order to close the package 100, the first and second rear top panels 112, 120 are attached to the top front panel 116, two sections of the left corner top panel 114 are attached to each other, and two sections of the right corner top panel 118 are attached to each other. This is provided by a transversal sealing made in the packaging machine after the package is filled with the product.

The package 100 also comprises a first bottom rear panel 122, a left corner bottom panel 124, a bottom front panel 126, a right corner bottom panel 128 and a second bottom rear panel 130, which together form a bottom of the package. In a similar manner as the first and second rear panel 102, 110, the first and second bottom rear panels 122, 130 are attached to each other. In order to close the package 100 and thereby form the bottom, the first and second bottom rear panels 122, 130 are attached to the bottom front panel 126, two sections of the left corner bottom panel 124 are attached to each other, and two sections of the right corner bottom panel 128 are attached to each other.

In case the package 100 is produced in a roll-fed packaging machine, a number of pieces of packaging material is provided after one another on a reel of packaging material. By having the pieces of packaging material arranged in this way a transversal sealing forming the bottom can be made at the same time as a transversal sealing forming the top of a subsequent package. After having made the transversal sealings, the packages are separated from each other by cutting them apart in a section between the transversal sealings.

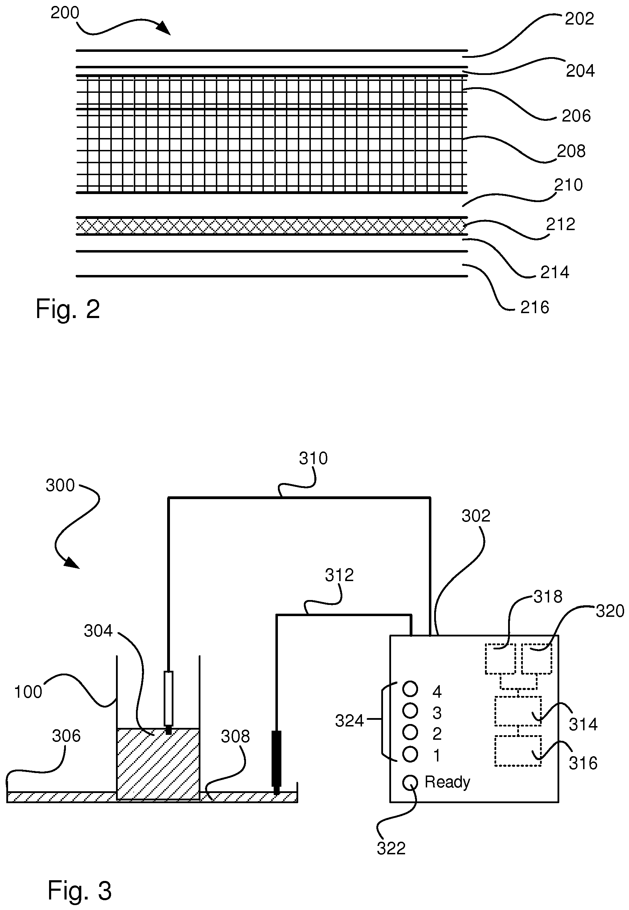

Fig. 2 generally illustrates by way of example a packaging material 200 that can be used for forming the package 100.

Facing the surrounding space, an outer coating 202 may be provided. The outer coating 202 may serve the purpose of avoiding that moisture of water is coming into contact with a printing layer 204 placed inside the outer coating 202. The printing layer 204 can comprise ink or any other material used for providing a print on the package 100.

Inside the printing layer 204, a first and a second paperboard layer 206, 208 can be provided. The first and second paperboard layers 206, 208 provide robustness to the package 100. The first paperboard layer 206 may be bleached paperboard with or without claycoat. The second paperboard layer 208 may be bleached or unbleached paperboard.

Next a lamination layer 210 made of plastic material is provided. The lamination layer 210 can provide for that microorganisms are hindered from coming into contact with the product held inside the package 100.

Inside the lamination layer 210, an Aluminum foil 212 can be provided. The Aluminum foil 212 can provide for that light, oxygen and odors are hindered from coming into contact with the product held inside the package 100, but also that flavors inside the package can be released from the package 100.

Closest to the product held inside the package 100, a first and a second internal coating 214, 216, made of e.g. plastics material, can be provided. One purpose with these are that the product is hindered from coming in direct contact with the Aluminum foil 212.

When cutting the packaging material 200 in pieces, either during a filling step as is the case in roll-fed packaging machines or when preparing blanks as is the case for blanks-fed filling machines, the different layers of the packaging material are open to the surrounding space in the transversal sealing of the top and in the transversal sealing of the bottom. It has been realized that this in combination with that the Aluminum foil 212 is conductive makes it possible to determine the integrity of the package in an efficient and reliable manner.

With reference to Fig. 3, a system 300 comprising an apparatus 302 for determining the integrity of the package 100 is illustrated by way of example. In this system 300, the package 100 can be opened and filled with a first conductive liquid 304, such as salt water, and placed in a tray 306 holding a second conductive liquid 308, such as salt water. In order to provide for that a current can flow from the apparatus 302 to the package 100, a first cable 310 connected to the apparatus 302 can be placed in contact with the first conductive liquid 304 in the package 100, and a second cable 312 connected to the apparatus 302 can be placed in contact with the second conductive liquid 308 in the tray 306.

With this system 300, the package 100 can in combination with the first and second conductive liquid 304, 308 act as a capacitor in a reliable and predictable manner such that it can be assured that the system is correctly set up, in turn providing for that relevant measurements can be made. In order to make this possible the apparatus 302 may comprise a processing device 314, a memory 316, a voltage supply 318 and a current measuring device 320. These components can be provided inside the apparatus 300 and may hence not be visible during normal operation.

More in detail, after having placed the package 100 filled with the first conductive liquid 304 in the tray 306, the voltage supply 318 can provide for that a potential difference is applied between the first and second cable 310, 312. This provides in turn for that a current is provided between the two if the first and second cable 310, 312 are placed correctly, and that the package 100, the tray 306, the first and second conductive liquids 304, 308 are provided such that a connection is formed between the first and second cable 310, 312 via the first conductive liquid 304, the package 100 and the second conductive liquid 308. For instance, if the package 100 is not placed in the second conductive liquid 308 there will be no connection and hence no current, which has the positive effect that the apparatus 302 by using the current measuring device 320 can determine as a first stage if the package 100 and the apparatus 302 are correctly set up before assessing the integrity of the package 100. To indicate to a user of the system 100 that this is appropriately set a first user interface output device 322, such as an indication lamp, may be provided on the apparatus 102.

Since the Aluminum foil 212 of the packaging material 200 is open to the surrounding space in the bottom of the package 100, the Aluminum foil 212 will be in direct contact with the second conductive liquid 308 when the package is placed in the tray 306 as illustrated in fig. 3. The first and second internal coating 214, 216, that can be made of plastic material, may function as dielectric medium, which in turn provides for that the package 100 may act as a capacitor.

If the package 100 is correctly sealed, both longitudinally and transversally, and the different layers are not damaged, the package 100 will act as a capacitor in a reliable and predictable manner such that it can be assured that the system is correctly set up in the first step. In a next step when determining the integrity of the package, if there is a damage or other deviation from the package 100 according to pre-set requirements this will affect the package's resistance. Thus, by measuring the resistance in a circuit formed by the first cable 310, the first conductive liquid 304, the package 100, the second conductive liquid 308 and the second cable 312 the integrity of the package can be determined. In order to communicate to which level the package conform with a package according to pre-set requirements, the apparatus 102 may also be provided with a second user interface output device 324, such as an integrity level indication lamps set. By having this lamps set, information about conformity between resistance reference data and measured resistance can be provided to the user. For instance, if the measured resistance based on current data conforms perfectly with the resistance reference data none four indication lamps may be activated, and if the measured resistance partly or not at all conforms with the resistance reference data a lamp next to a numeral "1", "2", "3" or "4" may be activated.

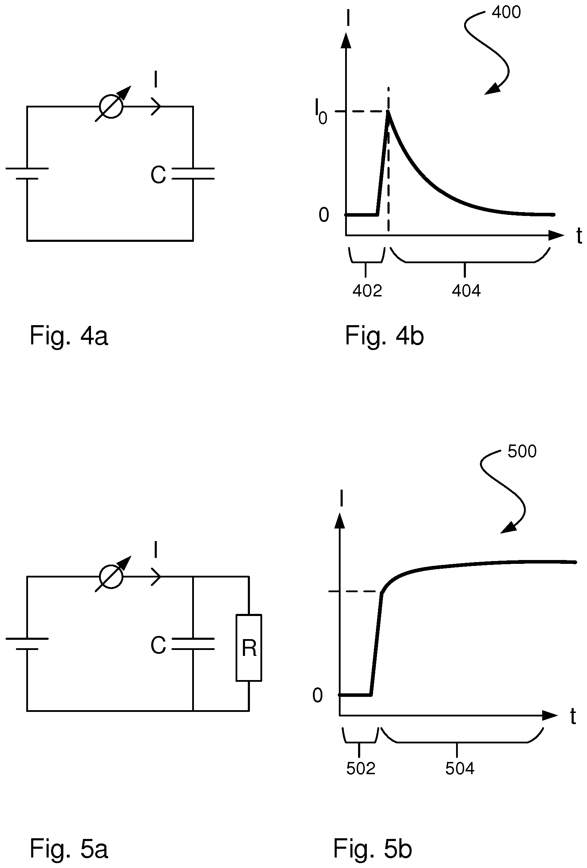

Fig. 4a and 4b generally illustrates a circuit scheme representing the system 300 of fig. 3, wherein the package has an adequate integrity, that is, the package is without faulty sealings or damaged packaging material, and a graph representing measured current over time, respectively.

The integrity test that give rise to a graph 400 may be divided in a rising phase 402 and a declining phase 404 representing a current decay. In a start of a measurement, the package, that can act like a capacitor, will be charged, which gives rise to a fast increase of the current 402. As the capacitor becomes charged to the applied level of voltage, a driving force for the current will decline which gives rise to the declining phase 404. The graph is typical for a capacitor, and it depends on inter alia the capacitance of the capacitor. A reference package that is known to have adequate packaging material and sealings may be used for forming reference data. This reference data may be used for assessing sample packages.Fig. 5a-5b: Inadequate integrity - Circuit scheme and current over time

Fig. 5a and 5b generally illustrates a circuit scheme representing the system 300 of fig. 3, wherein the package has an inadequate integrity, that is, the package has faulty sealings or damaged packaging material, and a graph representing measured current over time, respectively.

An effect of that the package has faulty sealings or damaged packaging material is that electrons can pass between an inside of the package 100, where the first conductive liquid 304 and the first cable 310 are provided, and an outside of the package 100, where the second conductive liquid 308 and the second cable 312 are provided. In terms of representing the system 300 in the form of a circuit scheme this has the effect in that the capacitor C is complemented with a resistor R in parallel.

The graph 500 of fig. 5b representing the integrity test of the package having inadequate integrity has a rising phase 502 similar to the rising phase 402 of fig. 4b, but unlike the graph 400 the rising phase 502 is not followed by a declining phase, but by a steady current phase 504. Because the electrons may pass between the inside and the outside of the package, a current reflecting the applied potential difference and resistance R will be achieved.

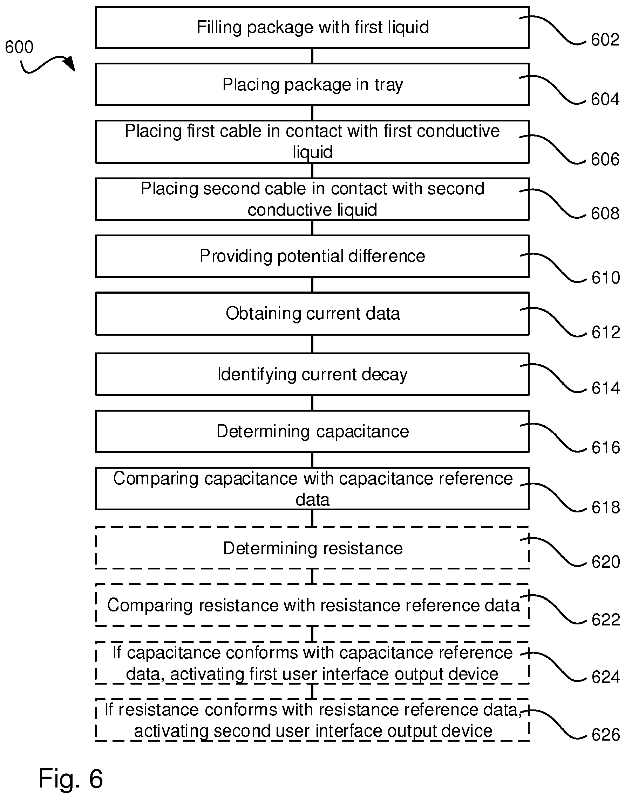

Fig. 6 illustrates a flowchart 600 of a method for assessing the package 100. Steps of the method may be described as follows.

In a first step 602, the package 100 can be filled with the first conductive liquid 304, such as salt water. This may achieved by that the package is opened and that product held in the package is removed before the first conductive liquid is filled into the package.

In a second step 604, the package 100 can be placed in the tray 306 filled with the second conductive liquid 308 such that the Aluminum foil 212 is in contact with the second conductive liquid 308.

In a third step 606, the first cable 310 can be placed in contact with the first conductive liquid 304.

In a fourth step 608, the second cable 312 can be placed in contact with the second conductive liquid 308.

In a fifth step 610, a potential difference can be provided between the first and second cable 312, 314.

In a sixth step 612, current data over a period of time can be obtained.

In a seventh step 614, a current decay can be identified in the current data.

In an eighth step 616, the capacitance of the package 100 can be determined based on the current decay.

In a ninth step 618, the capacitance determined in the eighth step 616 can be compared to capacitance reference data corresponding to a current decay for a reference system in which a closed circuit is present..

Optionally, in a tenth step 620, the resistance of the package is determined based on the current data and the potential difference, i.e. supplied voltage. In an eleventh step 622, the resistance is compared with resistance reference data in order to determine integrity of the package.

Optionally, in a twelfth step 624, in order to indicate whether or not the system 300 is correctly set, if capacitance conforms with capacitance reference data, a first user interface output device 322, indicating that the circuit formed by the first cable 310, the first conductive liquid 304, the package 100, the second conductive liquid 308 and the second cable 312 is closed, can be activated.

Optionally, in a thirteenth step 626, in order to indicate an integrity level of the package 100, if resistance conforms with resistance reference data, a second user interface output device 324 may be activated.

Even though a certain order is presented above, it is to be understood that this is only one out of many different possible orders.

Further, even though it is illustrated that the reference data is held in the memory 118 in the apparatus 102, it is equally possible to have the reference data shared among a number of apparatuses using a cloud service or other service for sharing data, and hence it is not restricted that the memory 118 is an integral part of the apparatus 102.

From the description above follows that, although various embodiments of the invention have been described and shown, the invention is not restricted thereto, but may also be embodied in other ways within the scope of the subject-matter defined in the following claims.

## Claims

1. A method (600) for assessing a package (100), wherein the package (100) is a multi-layer package comprising an Aluminum foil (212) held between at least one internal layer and at least one external layer, said method comprising
filling (602) the package with a first conductive liquid (304),
placing (604) the package in a tray (306) filled with a second conductive liquid (308), such that the Aluminum foil (212) is in contact with the second conductive liquid (308),
placing (606) a first cable (310) connected to an apparatus (302) in contact with the first conductive liquid (304),
placing (608) a second cable (312) connected to the apparatus (302) in contact with the second conductive liquid (308),
providing (610) a potential difference between the first and second cable (312, 314),
obtaining (612) current data over a period of time in a circuit formed by the first cable (310), the first conductive liquid (304), the package (100), the second conductive liquid (308) and the second cable (312),
identifying (614) a current decay in the current data,
determining (616) a capacitance based on the current decay, and
comparing (618) the capacitance with capacitance reference data in order to determine if the circuit is closed.

2. The method according to claim 1, further comprising
determining (620) a resistance based on the potential difference and the current data,
comparing (622) the resistance with resistance reference data in order to determine integrity of the package (100).

3. The method according to claim 1, wherein the at least one external layer comprises at least one paperboard layer (206, 208).

4. The method according to any one of the preceding claims, wherein the second conductive liquid (308) is salt water.

5. The method according to any one of the preceding claims, wherein the first conductive (304) liquid is salt water.

6. The method according to any one of the preceding claims, wherein the capacitance of the package (100) is 1 to 10 nF.

7. The method according to any one of the preceding claims, further comprising
if capacitance conforms with capacitance reference data, activating (624) a first user interface output device (322) indicating that the circuit formed by the first cable (310), the first conductive liquid (304), the package (100), the second conductive liquid (308) and the second cable (312) is closed.

8. The method according to any one of the preceding claims, further comprising
if resistance conforms with resistance reference data, activating (626) a second user interface output device (324) indicating an integrity level of the package (100) corresponding to a conformity level between the resistance and the resistance reference data.

9. An apparatus (302) for determining integrity of a package (100), wherein the package (100) is a multi-layer package comprising an Aluminum foil (212) held between at least one internal layer and at least one external layer, said apparatus comprising
a first cable (310) for providing contact between a first conductive liquid (304) placed in the package (100) and the apparatus (302),
a second cable (312) for providing contact between a second conductive liquid (308) placed in a tray (306) and the apparatus (302), wherein the package (100) is placed in the tray (306) such that the Aluminum foil (212) is in contact with the second conductive liquid (308),
a voltage supply (318) for providing a potential difference between the first and second cable (310, 312),
a current measuring device (320) configured to obtain current data over a period of time in a circuit formed by the first cable (310), the first conductive liquid (304), the package (100), the second conductive liquid (308) and the second cable (312),
a processing unit (314) and a memory (316), wherein the processing unit (314) is configured to identify a current decay in the current data, determine a capacitance based on the current decay, and compare the capacitance with capacitance reference data in order to determine if the circuit is closed.

10. The apparatus according to claim 9, wherein the processing unit (314) is further configured to determine a resistance based on the potential difference and the current data, and compare the resistance with resistance reference data in order to determine integrity of the package.

11. The apparatus according to claim 9 or 10, wherein the second conductive (308) liquid is salt water.

12. The apparatus according to any one of the claims 9 to 11, wherein the capacitance of the package (100) is 1 to 10 nF.

13. The apparatus according to any one of the claims 9 to 12, further comprising
a first user interface output device (324) configured to indicate that the circuit formed by the first cable (310), the first conductive liquid (304), the package (100), the second conductive liquid (308) and the second cable (312) is closed if capacitance conforms with capacitance reference data.

14. The apparatus according to any one of the claims 9 to 13, further comprising
a second user interface output device (324) configured to indicate an integrity level of the package (100) corresponding to a conformity level between the resistance and the resistance reference data.

15. A system (300) for assessing a package (100), wherein the package (100) is a multi-layer package comprising an Aluminum foil (212) held between at least one internal layer and at least one external layer, said system (300) comprising
a tray (306) for holding a second conductive liquid (308) and the package (100), and
the apparatus (302) according to any one of the claims 9 to 14.
